# EUROPÄISCHE PATENTSCHRIFT

(11) **EP 2 342 148 B1**
(45) Veröffentlichungstag und Bekanntmachung des Hinweises auf die Patenterteilung: **18.07.2012**
(21) Anmeldenummer: 09777763.5
(22) Anmeldetag: 08.08.2009
(51) Int. Cl.: B65G 13/06

(54) **ROLLENANTRIEB UND SYSTEM VON ROLLENANTRIEBEN**
ROLLER DRIVE AND SYSTEM OF ROLLER DRIVES
ENTRAÎNEMENT DE ROULEAUX ET SYSTÈME D ENTRAÎNEMENTS DE ROULEAUX

(30) Priorität: 27.08.2008 DE 102008039837
(43) Veröffentlichungstag der Anmeldung: 13.07.2011
(73) Patentinhaber: SEW-EURODRIVE GmbH & Co. KG, 76646 Bruchsal (DE)
(72) Erfinder: SCHMIDT, Josef, 76676 Graben-Neudorf (DE); BECKER, Günter, 76684 Östringen (DE); LEICHTER, Thomas, 76187 Karlsruhe (DE)
(86) Internationale Anmeldenummer: PCT/EP2009/005771
(87) Internationale Veröffentlichungsnummer: WO 2010/025806

(56) Entgegenhaltungen:
- US-A1- 2004 108 189
- US-B1- 6 244 427

## Beschreibung

Die Erfindung betrifft einen Rollenantrieb und ein System von Rollenantrieben.

**Aus der** US 2004/108189 A1 **ist ein gattungsgemäβen Rollenantrieb bekannt, umfassend ein von einem Elektromotor angetriebenes Rollenteil, wobei der elektromotor aus einer elektronischen Schaltung gespeist ist.**

**Aus der** US 6 244 427 B1 **ist ein modular aufgebauter getriebeloser Rollantrieb gezeigt**

Der Erfindung liegt die Aufgabe zugrunde, den Aufbau und Betrieb, insbesondere umfassend die Wartung, einer Förderanlage zu vereinfachen.

Erfindungsgemäß wird die Aufgabe bei dem Rollenantrieb nach den in Anspruch 1 und bei dem System nach den in Anspruch 15 angegebenen Merkmalen gelöst.

**Wichtige Merkmale der Erfindung bei dem Rollenantrieb sind, dass er ein von einem** Elektromotor angetriebenes Rollenteil umfasst,

wobei der Elektromotor aus einer elektronischen Schaltung gespeist ist, die mit einer Sekundärspule verbunden ist, welche induktiv gekoppelt ist an einen Primärleiter, der in der äußeren Umgebung des Rollenteil verlegt ist

wobei der Elektromotor, die elektronische Schaltung und die Sekundärspule vom Rollenteil zumindest teilweise gehäusebildend umgeben sind.

Von Vorteil ist dabei, dass eine galvanische Trennung realisiert ist zwischen dem Rollenantrieb und der Umgebung. Insbesondere ist die elektronische Schaltung und der Elektromotor von der Umgebung galvanisch getrennt ausgeführt.

Weiter vorteilig ist dabei, dass aus einem einzigen Primärleiter mehrere Rollenantriebe versorgbar sind, ohne dass eine Steckverbindung zu betätigen ist. Es wird also nur der Primärleiter innerhalb der Anlage verlegt und die Rollenantriebe entsprechend angeordnet. Somit sind alle Rollenantriebe induktiv versorgbar. Weiterer Vorteil ist hierbei, dass der Strom im Primärleiter zentral steuerbar oder regelbar ist. Somit ist die Antriebsleistung der Rollenantriebe steuerbar von einem zentralen Mittel aus. Dies ist insbesondere vorteilig bei einer Fördervorrichtung, in der die Rollenantriebe hintereinander angeordnet sind und auf diese Weise dieselbe und/oder gleichartig reduzierte Fördergeschwindigkeit erreichen. Bei einer solchen Anordnung sind sogar Datenübertragungsmittel einsparbar. Wenn Datenübertragungsmittel vorgesehen werden, ist die Fördergeschwindigkeit mit sehr hoher Genauigkeit einregelbar.

Außerdem ist der Rollenantrieb verschleißfrei in einfacher Weise versorgt und zentral versorgbar und somit auch zentral steuerbar, was die Wartung, den Betrieb und die Installation vereinfacht.

Für den Elektromotor, die elektronische Schaltung und die Sekundärspule ist ein gemeinsames Gehäuse bildbar, das zumindest das Rollenteil umfasst, welches gleichzeitig zum Antreiben des Fördergutes dient.

Bei einer vorteilhaften Ausgestaltung besteht das Gehäuse aus dem Rollenteil und mit diesem verbundenen, weiteren Gehäuseteilen, von denen zumindest ein Gehäuseteil ein Lager aufnimmt. Von Vorteil ist dabei, dass das Rollenteil als dünnwandiges Rohr fertigbar ist und die ein Lager aufnehmenden Gehäuseteile fräsend bearbeitbar sind.

Bei einer vorteilhaften Ausgestaltung ist der Stator mit einer feststehenden Achse oder Welle des Rollenantriebs verbunden. Von Vorteil ist dabei, dass die elektrische Versorgung feststehend ist und somit auch die elektronische Schaltung, welche den Stator speist, feststehend anordenbar ist.

Bei einer vorteilhaften Ausgestaltung ist der Rotor mit dem Rollenteil fest verbunden. Von Vorteil ist dabei, dass der Rotor mit Dauermagneten versehbar ist und somit die Antriebskräfte direkt in den Rotor und die mit diesem verbundenen Teile, wie beispielsweise das Rollenteil, übertragbar sind.

Bei einer vorteilhaften Ausgestaltung ist zwischen Sekundärwicklung und Primärleiter das Rollenteil angeordnet. Von Vorteil ist dabei, dass die induktive Versorgung des Antriebs durch dessen Gehäuseteil hindurch, insbesondere durch ein drehendes Gehäuseteil hindurch, ausführbar ist.

Bei einer vorteilhaften Ausgestaltung ist die Sekundärwicklung um einen Ferritkern herum vorgesehen, der zum Primärleiter hin gerichtet E-förmig ausgeführt ist. Von Vorteil ist dabei, dass die zwischen Hinleiter und Rückleiter verlaufenden magnetischen Feldlinien zum großen Teil durch den Mittelschenkel des Ferritkerns leitbar sind und somit ein hoher Wirkungsgrad erreichbar ist.

Bei einer vorteilhaften Ausgestaltung ist der Abstand zwischen Rollenantrieb und Primärleiter durch axiales Verschieben des Rollenantriebs einstellbar, insbesondere indem der Rollenantrieb eine konischen Gehäuseabschnitt aufweist. Von Vorteil ist dabei, dass der Abstand sehr genau einstellbar ist und somit auch ein geringer Abstand realisierbar ist. Außerdem findet keine wesentliche Abstandsänderung statt, wenn ein massereiches Fördergut eintrifft, da dieses höchstens sozusagen ein Durchhängen des Rollenteils bewirkt, also eine Auslenkung des Rollenteils in Gravitationsrichtung. Bei Installation der Primärleiter im axialen Randbereich, also nahe bei den Lagern, ist ein Durchhängen unwesentlich und je nach Wahl des Winkels des Konus unwirksam für eine Abstandsänderung.

Bei einer vorteilhaften Ausgestaltung ist das Rollenteil aus Kunststoff. Von Vorteil ist dabei, dass die induktive Versorgung mit hohem Wirkungsgrad ausführbar ist, insbesondere da keine Wirbelströme entstehen.

Bei einer vorteilhaften Ausgestaltung ist die elektronische Schaltung mit einem Sensor, insbesondere mit einer Sensorspulenwicklung, verbunden, insbesondere zur Detektion des Eintreffens eines metallischen Teils im Empfindlichkeitsbereich des Sensors. Von Vorteil ist dabei, dass der Antrieb nur dann aktivierbar ist, wenn auch ein zu förderndes Gut eintrifft. Somit ist Energie einsparbar.

Bei einer vorteilhaften Ausgestaltung sind die Primärleiter, insbesondere ein Hinleiter und ein Rückleiter einer Leiterschleife, senkrecht zur Achse oder Welle des Rollenantriebs abgeordnet. Von Vorteil ist dabei, dass keine Anschlusssteckverbindung zur elektrischen Versorgung des Rollenantriebs notwendig sind.

Bei einer vorteilhaften Ausgestaltung ist in den Primärleiter ein mittelfrequenter Strom, insbesondere mit einer Frequenz zwischen 10 und 500kHz eingeprägt, wobei der Sekundärwicklung eine Kapazität derart in Reihe oder parallel zugeschaltet ist, dass die zugehörige Resonanzfrequenz im Wesentlichen der Frequenz des Stromes im Primärleiter entspricht. Von Vorteil ist dabei, dass auch bei Abstandsänderung ein hoher im Wesentlichen nur gering veränderlicher Wirkungsgrad erreichbar ist.

Bei einer vorteilhaften Ausgestaltung ist zur Datenübertragung ein höher frequenter Stromanteil auf den Strom im Primärleiter und/oder in der Sekundärwicklung aufmoduliert vorgesehen. Von Vorteil ist dabei, dass keine zusätzlichen Mittel zur Datenübertragung notwendig sind.

Bei einer vorteilhaften Ausgestaltung treibt der Rotor des Elektromotors eine eintreibende Welle eines Getriebes an, dessen abtreibende Welle das Rollenteil antreibt. Von Vorteil ist dabei, dass eine höhere Drehzahl oder eine geringere Drehzahl beziehungsweise ein entsprechendes Drehmoment für das Fördergut bereit stellbar ist.

Bei einer vorteilhaften Ausgestaltung ist auf der von den Primärleitern abgewandten Seite des Ferritkerns, um den die Sekundärwicklung gewickelt vorgesehen ist, eine magnetische Abschirmung, wie Aluminiumteil oder dergleichen, vorgesehen. Von Vorteil ist dabei, dass metallisches Fördergut förderbar ist ohne wesentliche Wirbelstromverluste im metallischen Fördergut.

Wichtige Merkmale bei dem System von Rollenantrieben sind, dass diese aus einem Primärteitersystem induktiv versorgt sind,
wobei die Rollenantriebe hintereinander entlang dem Primärleitersystem angeordnet sind,
wobei von einer Einspeisung ein Wechselstrom, insbesondere mit einer Frequenz zwischen 10 und 500kHz, eingeprägt wird,
wobei die Antriebsleistung, Drehzahl, und/oder Drehmoment jedes Rollenantriebe von der Einspeisung gleichartig gesteuert oder geregelt ist, insbesondere also durch Stromvorgabe im Primärleitersystem.

Von Vorteil ist dabei, dass eine einzige zentrale Einheit, wie Einspeisung, genügt, um die Leistungsdaten der jeweiligen Rollenantriebe zu steuern oder zu regeln.

Weitere Vorteile ergeben sich aus den Unteransprüchen.

### Bezugszeichenliste

1 Welle
2 Gehäuseteil
3 Lager
4 Statorwicklung mit Blechpaket
5 Sekundärwicklung
6 Ferritkern
7 Lager
8 Gehäuseteil
9 elektronische Schaltung
10 Rollenteil
11 Permanentmagnete
12 Motorgehäuseteil
13 Hinleiter
14 Rückleiter
15 Ferritem

Die Erfindung wird nun anhand von Abbildungen näher erläutert:

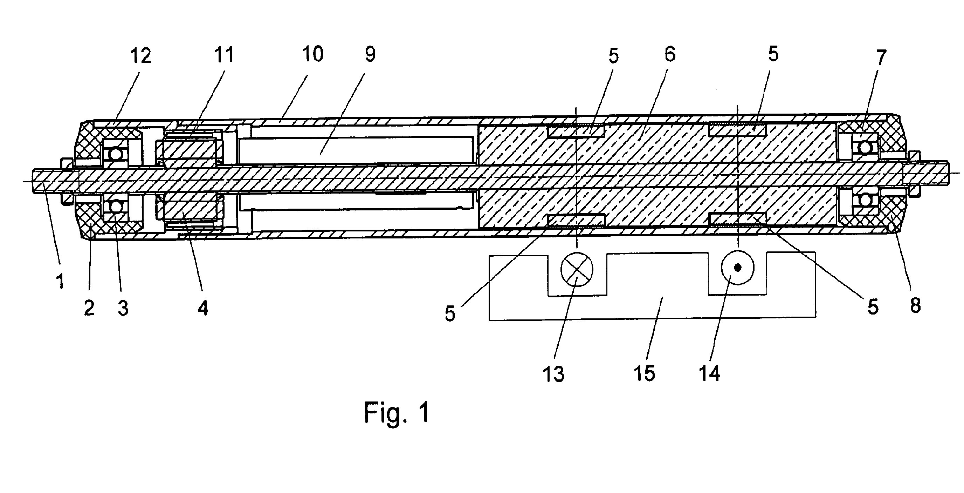

In der Figur 1 ist ein erfindungsgemäßer Rollenantrieb in Schnittansicht gezeigt.

Hierbei ist eine Welle 1 feststehend angeordnet, insbesondere also mit einem benachbarten Anlagenteil fest oder lösbar verbunden. Das Gehäuse des Rollenantriebs ist drehbar gelagert. Hierzu ist ein Lager 3 vorgesehen, mittels dessen ein Gehäuseteil 2 drehbar an der feststehenden Welle 1 gelagert ist, wobei der Außenring des Lagers 3 im Gehäuseteil 2 aufgenommen ist und die Welle 1 durch den Innenring des Lagers 3 geführt ist. Am Gehäuseteil 2 ist ein Motorgehäuseteil 12 aufgesteckt und verbunden

Mit der Welle 1 ist ebenfalls feststehend die Statorwicklung 4 mit Blechpaket eines Elektromotors an der Welle 1 fest oder lösbar verbunden. Der Elektromotor umfasst auch Permanentmagnete 11, die am Motorgehäuseteil 12 befestigt sind, insbesondere geklebt sind.

Am Gehäuseteil 12 ist das Rollenteil 10 aufgesteckt verbunden, das an seinem anderen axialen Endbereich mit einem Gehäuseteil 8 verbunden ist, welches über ein Lager 7 an der feststehenden Welle 1 gelagert ist.

Somit sind die das Gehäuseteil (2, 12, 8) bei geeigneter Bestromung der Statorwicklung in Drehbewegung versetzbar.

Mit der Welle 1 ist auch eine elektronische Schaltung 9 verbunden, die die Statorwicklung 4 des Elektromotors speist. Die elektronische Schaltung 9 wird mittels einer Sekundärwicklung 5 berührungslos aus Primärleitern versorgt, in die ein mittelfrequenter Wechselstrom, insbesondere mit einer Frequenz zwischen 10 und 500 kHz, eingeprägt wird. Die Sekundärwicklung 5 ist wie auch die elektronische Schaltung 9 feststehend, also mit der Welle 1 verbunden, angeordnet. Dabei ist die Sekundärwicklung 5 um einen Ferritkern 6 herum gewickelt vorgesehen.

Die Primärleiter sind Teil einer Leiterschleife, bei der ein erster Primärleiter als Hinleiter und ein zweiter Primärleiter als Rückleiter der Leiterschleife vorgesehen ist. Hinleiter und Rückleiter sind im Wesentlichen parallel zueinander und unterhalb des Rollenantriebs senkrecht zur Wellenachse verlegt.

Vorzugsweise wird der Ferritkern 6 mit Sekundärwicklung unterhalb der Welle 1, also im zu den Primärleitern hin gewandten Raumbereich innerhalb des Rollenteils 10 vorgesehen. Somit ist ein höhere Wirkungsgrad erreichbar. Außerdem sind auf der von den Primärleitern abgewandten Seite des Rollenantriebs metallische Objekte beförderbar, die somit den Magnetfluss und daher auch den Wirkungsgrad nur unwesentlich beeinflussen.

Das Rollenteil 10 ist vorzugsweise aus Kunststoff, wodurch Wirbelströme im Rollenteil verhindert werden und somit der Wirkungsgrad erhöht ist.

Die elektronische Schaltung 9 umfasst einen Gleichrichter, der aus der über die Sekundärspule mit parallel oder seriell zugeschalteter Kapazität anliegenden Wechselspannung eine unipolare Spannung, insbesondere Gleichspannung erzeugt, aus der ein Wechselrichter versorgt ist. Der Wechselrichter umfasst hierbei drei Halbbrücken, die jeweils aus zwei in Reihe geschalteten elektronischen Halbleiter-Leistungsschaltern, wie IGBT, MOSFET oder dergleichen, zusammengesetzt sind. Die Ansteuerung der Schalter erfolgt pulweitenmoduliert. Die Schalter der Halbbrücken werden dabei derart abwechselnd angesteuert, dass ein Drehfeld erzeugbar ist, mit der die Drehzahl des Motors gesteuert wird.

In Figur 1 ist auch der Hinleiter 13 und der Rückleiter 14 des Primärleitersystems gezeigt, die auf ihrer dem Rollenantrieb abgewandten Seite mit einem Ferritkern 15 umgeben sind.

Bei weiteren erfindungsgemäßen Ausführungsbeispielen ist zwischen der Sekundärspule mit zugehöriger Kapazität und dem Gleichrichter ein Vierpol angeordnet, der passiv ausgeführt ist, eingangsseitig an die aus Sekundärspule und Kapazität gebildete Stromquelle angeschlossen ist und ausgangsseitig ein spannungsquellenartiges Verhalten aufweist. Hierbei ist der Vierpol im Wesentlichen als inverser Gyrator ausführbar. Alternativ ist auch eine aktive Spannungsanpassung in der elektronischen Schaltung 9 integrierbar, was jedoch aufwendiger ist.

Bei weiteren erfindungsgemäßen Ausführungsbeispielen ist auch ein Drehzahlsensor vorgesehen, so dass die Rollendrehzahl regelbar wird auf einen gewünschten Sollwert hin.

Bei weiteren erfindungsgemäßen Ausführungsbeispielen wird ein höher frequenter Stromanteil auf den Primärleiter aufmoduliert und bei der Sekundärwicklung demoduliert oder umgekehrt. Somit ist ein nicht nur eine berührungslose Energieübertragung sonder auch ein berührungsloser Datenaustausch zwischen der elektronischen Schaltung 9 und einem mit den Primärleitern feststehende angeordneten Zentralrechner ermöglicht.

Bei weiteren erfindungsgemäßen Ausführungsbeispielen wird der Ferritkern 6 und die Wicklung 5 unterhalb der Welle angeordnet, um einen großem Abstand zum an der Oberseite des Rollantriebs vorsehbaren Transportgut zu erreichen, das somit trotz metallischer Ausführung im Wesentlichen keine Wirbelstromverluste erzeugen kann. Außerdem ist somit im Inneren des Rollenantriebs mehr Platz geschaffen, beispielsweise für eine Abschirmung, wie Aluminium-Blechteil oder dergleichen.

Bei weiteren erfindungsgemäßen Ausführungsbeispielen wird statt des Elektromotors ein Getriebemotor vorgesehen. Somit ist das Rollenteil von einer Abtriebswelle eines Getriebes angetrieben, das von einem Elektromotor angetrieben wird.

Bei weiteren erfindungsgemäßen Ausführungsbeispielen werden die Primärleiter an der von der Rolle abgewandten Seite zumindest teilweise von einem Ferritkern umgeben. Somit ist der Feldfluss noch besser konzentriert und die induktive Kopplung zur Sekundärwicklung verbessert.

Bei weiteren erfindungsgemäßen Ausführungsbeispielen sind die Primärleiter einem axialen Endbereich der Rolle, umfassend Rollenteil und Gehäuseteil 8 gegenüberliegend vorgesehen und die Rolle konisch ausgeführt, so dass der Abstand zwischen Primärleiter und Ferritkern 6 mittels axialem Verschieben einstellbar ist. Außerdem ist der Ferritkern entsprechend an der Innenseite des axialen Endbereichs des Rollenteils vorgesehen.

Bei weiteren erfindungsgemäßen Ausführungsbeispielen wird die Sekundärwicklung 5 als Sensorspule benutzt, womit ein Eintreffen des zu fördernden Objektes ausführbar ist. Hierzu wird vorzugsweise ein höher frequenter Strom in die Sekundärspule eingespeist und die mittels erfassten Strom und Spannungswerten die Induktivitätsänderung bei Eintreffen eines zu fördernden Objektes in den Empfindlichkeitsbereich der Sekundärwicklung 5 detektiert. Nach festgestelltem Eintreffen wird der Rollantrieb aktiviert, also der Elektromotor gestartet. Da der Elektromotor ein Synchronmotor ist, ist ein hochdynamischer Startvorgang ermöglicht. Insbesondere wird der Startvorgang vor Berührung mit dem zu fördernden Objekt ausgeführt. Alternativ wird anstatt der Sekundärspule eine separate Sensorspule zur Detektion des Eintreffens des zu fördernden Objekts vorgesehen.

## Patentansprüche

1. Rollenantrieb, umfassend ein von einem Elektromotor (4,11) angetriebenes Rollenteil (10),
wobei der Etektromotor (4,11) aus einer elektronischen Schaltung (9) gespeist ist, **dadurch gekennzeichnet, dass** die Schaltung mit einer Sekundärspule (5) verbunden ist, welche induktiv gekoppelt ist an einen Primärleiter (13,14,15), der in der äußeren Umgebung des Rollenteil (10) verlegt ist
wobei der Elektromotor (4,11), die elektronische Schaltung (9) und die Sekundärspule (5) vom Rollenteil (10) zumindest teilweise gehäusebildend umgeben sind.

2. Rollenantrieb nach Anspruch 1,
**dadurch gekennzeichnet, dass**
das Gehäuse aus dem Rollenteil (10) und mit diesem verbundenen, weiteren Gehäuseteilen (2,8,12) besteht, von denen zumindest ein Gehäuseteil (2,8) ein Lager (3,7) aufnimmt.

3. Rollenantrieb nach mindestens einem der vorangegangenen Ansprüche,
**dadurch gekennzeichnet, dass**
der Stator (4) des elektromotors mit einer feststehenden Achse oder Welle (1) des Rollenantriebs verbunden ist.

4. Rollenantrieb nach mindestens einem der vorangegangenen Ansprüche,
**dadurch gekennzeichnet, dass**
der Rotor (11) mit dem Rollenteil (10) fest verbunden ist.

5. Rollenantrieb nach mindestens einem der vorangegangenen Ansprüche,
**dadurch gekennzeichnet, dass**
zwischen Sekundärwicklung (5) und Primärleiter (13,14,15) das Rollenteil (10) angeordnet ist.

6. Rollenantrieb nach mindestens einem der vorangegangenen Ansprüche,
**dadurch gekennzeichnet, dass**
die Sekundärwicklung (5) um einen Ferritkern (6) herum vorgesehen ist, der zum Primärleiter (13,14,15) hin gerichtet E-förmig ausgeführt ist.

7. Rollenantrieb nach mindestens einem der vorangegangenen Ansprüche,
**dadurch gekennzeichnet, dass**
der Abstand zwischen Rollenantrieb und Primärleiter (13,14,15) durch axiales Verschieben des Rollenantriebs einstellbar ist, insbesondere indem der Rollenantrieb eine konischen Gehäuseabschnitt aufweist.

8. Rollenantrieb nach mindestens einem der vorangegangenen Ansprüche,
**dadurch gekennzeichnet, dass**
das Rollenteil (10) aus Kunststoff ist.

9. Rollenantrieb nach mindestens einem der vorangegangenen Ansprüche,
**dadurch gekennzeichnet, dass**
die elektronische Schaltung (9) mit einem Sensor, insbesondere mit einer Sensorspulenwicklung, verbunden ist, insbesondere zur Detektion des Eintreffens eines metallischen Teils im Empfindlichkeitsbereich des Sensors.

10. Rollenantrieb nach mindestens einem der vorangegangenen Ansprüche,
**dadurch gekennzeichnet, dass**
die Primärleiter (13,14,15), insbesondere ein Hinleiter (13) und ein Rückleiter (14) einer Leiterschleife, senkrecht zur Achse oder Wellen des Rolleantriebs angeordnet sind.

11. Rollenantrieb nach mindestens einem der vorangegangenen Ansprüche,
**dadurch gekennzeichnet, dass**
in den Primärleiter (13,14,15) ein mittelfrequenter Strom, insbesondere mit einer Frequenz zwischen 10 und 500kHz eingeprägt ist, wobei der Sekundärwicklung (5) eine Kapazität derart in Reihe oder parallel zugeschaltet ist, dass die zugehörige Resonanzfrequenz im Wesentlichen der Frequenz des Stromes im Primärleiter (13,14,15) entspricht.

12. Rollenantrieb nach mindestens einem der vorangegangenen Ansprüche,
**dadurch gekennzeichnet, dass**
zur Datenübertragung ein höher frequenter Stromanteil auf den Strom im Primärleiter (13,14,15) und/oder in der Sekundärwicklung (5) aufmoduliert vorgesehen ist.

13. Rollenantrieb nach mindestens einem der vorangegangenen Ansprüche,
**dadurch gekennzeichnet, dass**
der Rotor (11) des Elektromotors (4,11) eine eintreibende Welle eines Getriebes antreibt, dessen abtreibende Welle das Rollenteil (10) antreibt.

14. Rollenantrieb nach mindestens einem der vorangegangenen Ansprüche,
**dadurch gekennzeichnet, dass**
auf der von den Primärleitern (13,14,15) abgewandten Seite des Ferritkerns (6) um den die Sekundärwicklung (5) gewickelt vorgesehen ist, eine magnetische Abschirmung, wie Aluminiumteil oder dergleichen, vorgesehen ist.

15. System von Rollenantrieben, die aus einem Primärleitersystem (13,14,15) induktiv versorgt sind,
wobei die Rollenantriebe hintereinander entlang dem Primärleitersystem (13,14,15) angeordnet sind,
wobei von einer Einspeisung ein Wechselstrom, insbesondere mit einer Frequenz zwischen 10 und 500kHz, eingeprägt wird,
wobei die Antriebsleistung, Drehzahl, und/oder Drehmoment jedes Rollenantriebe von der Einspeisung gleichartig gesteuert oder geregelt ist, insbesondere also durch Stromvorgabe im Primärleitersystem.

## Claims

1. A roller drive, comprising a roller part (10) driven by an electric motor (4, 11), the electric motor (4, 11) being supplied from an electronic circuit (9), **characterised in that** the circuit is connected to a secondary coil (5) which is inductively coupled to a primary conductor (13, 14, 15) which is laid in the external area around the roller part (10),
the electric motor (4, 11), the electronic circuit (9) and the secondary coil (5) being surrounded by the roller part (10), at least partially forming a housing.

2. A roller drive according to claim 1, **characterised in that** the housing consists of the roller part (10) and further housing parts (2, 8, 12) connected thereto, of which at least one housing part (2, 8) receives a bearing (3, 7).

3. A roller drive according to at least one of the preceding claims, **characterised in that** the stator (4) of the electric motor is connected to a fixed axle or shaft (1) of the roller drive.

4. A roller drive according to at least one of the preceding claims, **characterised in that** the rotor (11) is connected securely to the roller part (10).

5. A roller drive according to at least one of the preceding claims, **characterised in that** the roller part (10) is arranged between the secondary winding (5) and the primary conductor (13, 14, 15).

6. A roller drive according to at least one of the preceding claims, **characterised in that** the secondary winding (5) is provided around a ferrite core (6) which is configured in an E-shape directed towards the primacy conductor (13, 14, 15).

7. A roller drive according to at least one of the preceding claims, **characterised in that** the distance between the roller drive and the primary conductor (13, 14, 15) is adjustable by axial displacement of the roller drive, in particular by the roller drive having a conical housing section.

8. A roller drive according to at least one of the preceding claims, **characterised in that** the roller part (10) is made of plastics material.

9. A roller drive according to at least one of the preceding claims, **characterised in that** the electronic circuit (9) is connected to a sensor, in particular to a sensor coil winding, in particular for detecting the arrival of a metal part in the sensitivity range of the sensor.

10. A roller drive according to at least one of the preceding claims, **characterised in that** the primary conductors (13, 14, 15), in particular a supply conductor (13) and a return conductor (14) of a conductor loop, are arranged perpendicular to the axle or shaft (1) of the roller drive.

11. A roller drive according to at least one of the preceding claims, **characterised in that** a medium-frequency current, in particular with a frequency of between 10 and 500 kHz, is applied to the primary conductor (13, 14 15), a capacitance being connected in series or in parallel to the secondary winding (5) such that the associated resonant frequency substantially corresponds to the frequency of the current in the primary conductor (13, 14, 15).

12. A roller drive according to at least one of the preceding claims, **characterised in that** for data transmission a higher-frequency current component is provided modulated on the current in the primary conductor (13, 14, 15) and/or in the secondary winding (5).

13. A roller drive according to at least one of the preceding claims, **characterised in that** the rotor (11) of the electric motor (4, 11) drives an input shaft of a gear, the output shaft of which drives the roller part. (10).

14. A roller drive according to at least one of the preceding claims, **characterised in that** a magnetic shield, such as an aluminium part or the like, is provided on the side of the ferrite core (6) remote from the primary conductor (13, 14, 15), around which core the secondary winding (5) is wound.

15. A system of roller drives which are inductively supplied from a primary-conductor system (13, 14, 15),
the roller drives being arranged one after another along the primary-conductor system (13, 14, 15),
an alternating current, in particular with a frequency of between 10 and 500 kHz, being applied by a power supply means,
the drive power, rotational speed and/or torque of each roller drive being controlled or regulated in the same manner by the power supply means, in particular therefore by stimulating the current in the primary-conductor system.

## Revendications

1. Entraînement de rouleau, comprenant une partie rouleau (10) entraînée par un moteur électrique (4, 11), sachant que le moteur électrique (4, 11) est alimenté à partir d'un montage électronique (9),
**caractérisé en ce que** le montage est relié à une bobine secondaire (5) couplée inductivement à un conducteur primaire (13, 14, 15), qui est placé dans l'environnement extérieur de la partie rouleau (10),
sachant que le moteur électrique (4, 11), le montage électronique (9) et la bobine secondaire (5) sont entourés au moins partiellement par la partie rouleau (10), qui forme ainsi un boîtier.

2. Entraînement de rouleau selon la revendication 1, **caractérisé en ce que** le boîtier est constitué de la partie rouleau (10) et d'autres parties de boîtier (2, 8, 12) assemblées à celle-ci, parmi lesquelles au moins une partie de boîtier (2, 8) reçoit un palier (3, 7).

3. Entraînement de rouleau selon au moins une des revendications précédentes, **caractérisé en ce que** le stator (4) du moteur électrique est relié à un axe ou arbre (1) fixe de l'entraînement de rouleau.

4. Entraînement de rouleau selon au moins une des revendications précédentes, **caractérisé en ce que** le rotor (11) est fixement relié à la partie rouleau (10).

5. Entraînement de rouleau selon au moins une des revendications précédentes, **caractérisé en ce que** la partie rouleau (10) est disposée entre le bobinage secondaire (5) et le conducteur primaire (13, 14, 15).

6. Entraînement de rouleau selon au moins une des revendications précédentes, **caractérisé en ce que** le bobinage secondaire (5) est prévu tout autour d'un tore de ferrite (6) qui est réalisé en forme de E en direction du conducteur primaire (13, 14, 15).

7. Entraînement de rouleau selon au moins une des revendications précédentes, **caractérisé en ce que** la distance entre l'entraînement de rouleau et le conducteur primaire (13, 14, 15) peut être réglée par translation axiale de l'entraînement de rouleau, en particulier par le fait que l'entraînement de rouleau présente un tronçon de boîtier conique.

8. Entraînement de rouleau selon au moins une des revendications précédentes, **caractérisé en ce que** la partie rouleau (10) est en matière plastique.

9. Entraînement de rouleau selon au moins une des revendications précédentes, **caractérisé en ce que** le montage électronique (9) est relié à un détecteur, en particulier à un bobinage de détection, en particulier pour détecter l'arrivée d'une pièce métallique dans la zone de détection du détecteur.

10. Entraînement de rouleau selon au moins une des revendications précédentes, **caractérisé en ce que** les conducteurs primaires (13, 14, 15), en particulier un conducteur aller (13) et un conducteur de retour (14) d'une boucle conductrice, sont disposés perpendiculairement à l'axe ou arbre (1) de l'entraînement de rouleau.

11. Entraînement de rouleau selon au moins une des revendications précédentes, **caractérisé en ce qu'**un courant de moyenne fréquence, en particulier avec une fréquence comprise entre 10 et 500 kHz, est injecté dans le conducteur primaire (13, 14, 15), sachant qu'un condensateur est monté en série ou en parallèle avec le bobinage secondaire (5) de telle sorte que la fréquence de résonance associée correspond pour l'essentiel à la fréquence du courant dans le conducteur primaire (13, 14, 15).

12. Entraînement de rouleau selon au moins une des revendications précédentes, **caractérisé en ce qu'**il est prévu pour la transmission de donnée une fraction de courant à plus haute fréquence qui est modulée sur le courant dans le conducteur primaire (13, 14, 15) et/ou dans le bobinage secondaire (5).

13. Entraînement de rouleau selon au moins une des revendications précédentes, **caractérisé en ce que** le rotor (11) du moteur électrique (4, 11) entraîne un arbre d'entrée d'une transmission dont l'arbre de sortie entraîne la partie rouleau (10).

14. Entraînement de rouleau selon au moins une des revendications précédentes, **caractérisé en ce qu'**un blindage magnétique, tel qu'une pièce d'aluminium ou analogue, est prévu sur le côté du tore de ferrite (6) qui est éloigné des conducteurs primaires (13, 14, 15), le bobinage secondaire (5) étant enroulé autour du tore de ferrite (6).

15. Système d'entraînements de rouleaux qui sont alimentés par induction à partir d'un système de conducteur primaire (13, 14, 15),
sachant que les entraînements de rouleaux sont disposés les uns à la suite des autres le long du système de conducteur primaire (13, 14, 15),
sachant qu'une alimentation électrique injecte un courant alternatif, en particulier avec une fréquence comprise entre 10 et 500 kHz,
sachant que la puissance d'entraînement, la vitesse de rotation et/ou le couple de rotation de chaque entraînement de rouleau sont commandés ou régulés de la même manière par l'alimentation électrique, en particulier donc par prescription du courant dans le système de conducteur primaire.
